# EUROPEAN PATENT SPECIFICATION

(11) **EP 0 650 818 B1**
(45) Date of publication and mention of the grant of the patent: **29.12.1997**
(21) Application number: 94116698.5
(22) Date of filing: 22.10.1994
(51) Int. Cl.: B29C 47/00, B29C 47/88

(54) **Tubular film extrusion method of polypropylene**
Verfahren zum Extrudieren einer Schlauchfolie aus Polypropylen
Procédé d'extrusion d'un film tubulaire en polypropylène

(30) Priority: 29.10.1993 JP 271694/93
(43) Date of publication of application: 03.05.1995
(73) Proprietor: MITSUI TOATSU CHEMICALS, Inc., Chiyoda-Ku Tokyo 100 (JP)
(72) Inventor: Masuda, Kazuhiko, Yokohama-shi, Kanagawa-ken (JP); Yokote, Sachio, Zushi-shi, Kanagawa-ken (JP); Odaira, Yukio, Yokohama-shi, Kanagawa-ken (JP); Inoue, Norihide, Takaishi-shi, Osaka (JP)
(74) Representative: Luderschmidt, Schüler & Partner GbR

(56) References cited:
- EP-A- 0 414 202
- EP-A- 0 428 972
- MODERN PLASTICS INTERNATIONAL, vol.23, no.4, April 1993 page 67 'Syndiotactic PP retains properties in mass production'
- DATABASE WPI Week 8340, Derwent Publications Ltd., London, GB; AN 83-779353 & JP-A-58 142 818 (IDEMITSU PETROCHEM.) 25 August 1983

## Description

### BACKGROUND OF THE INVENTION

### 1. Field of the Invention

This invention relates to a tubular film extrusion method for easily forming a polypropylene film having excellent transparency and surface gloss.

### 2. Description of the Related Art

In general, isotactic polypropylene is economical and excellent in mechanical properties, heat resistance, hygienic suitability and water-vapor-permeation resistance and when molded, provides good external appearance, so that it has been used widely for various applications.

Tubular polypropylene films are economical and excellent in transparency, rigidity, moistureproofness and heat resistance so that they are now used widely for various packaging materials.

Recently, it was found by J.A. Ewen et al. that polypropylene having such high tacticity as exceeding 0.7 in terms of syndiotactic pentad fraction can be obtained using a catalyst composed of aluminoxane and a transition metal compound having an asymmetric ligand (J. Amer. Chem. Soc., 110, 6255-6, 1988). Compared with conventional isotactic polypropylene, this syndiotactic polypropylene is extremely high in transparency and surface gloss and is also excellent in flexibility. The syndiotactic polypropylene is hence expected to develop new application fields to which the conventional isotactic polypropylene cannot be applied. It, however, has not been produced yet on an industrial scale because of some problems unsolved in processability or the like.

For the excellent properties described above, syndiotactic polypropylene is expected to develop a new application as soft transparent films. It is known that for the formation of the syndiotactic polypropylene, a conventional method for the formation of an isotactic polypropylene film, for example, T-die extrusion or water-quenching tubular-film extrusion method (Japanese Patent Laid-Open No. 81130/1991) can be employed.

Isotactic polypropylene films, on the other hand, are used for a wide variety of applications because they are economical and have excellent rigidity, moisture-proofness and heat resistance. To improve the problem of insufficient transparency, a crystalline propylene-ethylene copolymer is employed in combination with isotactic polypropylene. Films available even from such a copolymer are however still insufficient in transparency, leading to a desire for further improvements.

When such an isotactic propylene homopolymer or copolymer is formed by the tubular film extrusion method, it is generally necessary to cool the resulting film with water, namely, quench it so that the crystallinity of the propylene is controlled low to provide the film with higher transparency. If the film were cooled in the air, namely, were gradually cooled, the crystallization of the polypropylene would proceed, leading to the problems that the film so obtained would show no flexibility and would exhibit only reduced impact resistance and transparency. It is therefore the current situation that the air-cooled tubular film extrusion method which is commonly used to form polyethylene or the like can hardly be employed for the production of isotactic polypropylene films.

Syndiotactic polypropylene films, on the other hand, are superior in properties such as transparency and surface gloss to isotactic polypropylene films so that development of new applications is expected thereon. Syndiotactic polypropylene, however, is accompanied with the drawback that, for its slower crystallization rate and lower crystallinity compared with isotactic polypropylene, a tube extruded through a die upon the formation of a film from it by the tubular film extrusion method, tends to wind itself around a water-cooling ring or tends to stick together at inner walls thereof when folded by pinch rolls and the tubular film so obtained cannot be opened easily.

### SUMMARY OF THE INVENTION

An object of the present invention is to overcome the above-described drawbacks and to provide a tubular film extrusion method for easily forming a polypropylene film having excellent transparency and surface gloss.

With foregoing problems in view, the present inventors have conducted an extensive investigation to provide a tubular film extrusion method for easily forming a polypropylene film having excellent transparency and surface gloss. As a result, it has been found that a polypropylene film having extremely high transparency and surface gloss can be obtained by air-cooled tubular-film extrusion of a resin composition composed of a syndiotactic polypropylene having a syndiotactic pentad fraction of at least 0.5 as measured by ¹³C-NMR and an isotactic polypropylene, leading to the completion of the invention.

In one aspect of the present invention, there is thus provided a film forming method for a polypropylene resin composition, which comprises subjecting a polypropylene resin composition composed of 5-95 parts by weight of a syndiotactic polypropylene and 95-5 parts by weight of an isotactic polypropylene to air-cooled tubular-film extrusion.

In another aspect of the present invention, there is also provided a film forming method for the above polypropylene resin composition wherein the syndiotactic polypropylene has a syndiotactic pentad fraction of at least 0.5 as measured by ¹³C-NMR.

### DETAILED DESCRIPTION OF THE PREFERRED EMBODIMENTS

Examples of a catalyst suitable for use in the production of a syndiotactic polypropylene useful in the present invention include catalysts composed of a cocatalyst and a bridged transition metal compound having an asymmetric ligand such as those disclosed, for example, in Japanese Patent Laid-Open Nos. 41303/1990, 41305/1990, 274703/1990, 274704/1990, 179005/1991 (corresponding to U.S. Patent Nos. 5,155,080 and 5,225,500), 179006/1991 and 69394/1994. Catalysts even having a different structure can still be used insofar as they make it possible to provide a polypropylene having a syndiotactic pentad fraction of at least 0.7 as measured by ¹³C-NMR. Slurry polymerization, bulk polymerization and vapor phase polymerization can all be employed for polymerization.

Illustrative of the syndiotactic polypropylene usable in the present invention include propylene homopolymer and/or copolymers of propylene with ethylene and/or an α-olefin. Examples of the α-olefin include C₄₋₂₅ α-olefins such as 1-butene, 1-pentene, 1-decene and 1-hexadecene. Copolymers containing a small amount of an olefin such as cyclopentene or norbornene or a diene such as hexadiene, octadiene, decadiene, dicyclopentadiene or 5-ethylidene-2-norbornene can also be used as such syndiotactic polypropylenes. Such copolymers can each be obtained by copolymerizing propylene and a small amount of a comonomer in the presence of a catalyst known to provide a poly-α-olefin having good syndiotacticity. These copolymers can be those obtained by either random copolymerization or block copolymerization. It is generally recommended to use a random copolymer when the transparency is of primary importance and, on the other hand, to use a block copolymer when the low-temperature impact resistance is important.

Examples of the α-olefin usable in the present invention include C₄₋₂₅ α-olefins such as 1-butene, 1-hexene, 1-pentene, 1-decene and 1-hexadecene. Two or more comonomers selected from ethylene and these α-olefins can also be used in combination.

The syndiotactic propylene homopolymer useful in the present invention preferably has a syndiotactic pentad fraction of at least 0.7, with at least 0.75 being particularly preferred. The syndiotactic pentad fraction is calculated in accordance with the method disclosed in U.S. Patent No. 4,892,851 and it is the ratio of the peak of methyl groups derived from the syndiotactic pentad structure, said peak being observed around 20.2 ppm, to the sum of the peaks of all methyl groups as measured at 135°C in trichlorobenzene by ¹³C-NMR while using tetramethylsilane as a standard. When a syndiotactic propylene copolymer is used in the present invention, the syndiotactic pentad fraction of propylene chains, which is calculated as a ratio of the intensity of a peak observed around 20.2 ppm to the intensity of an peak derived from methyl groups of all propylene chains as measured similarly by ¹³C-NMR, is at least 0.3, with at least 0.5 being particularly preferred.

The molecular weight of the syndiotactic polypropylene may be in a range of from 0.1 to 10 dl/g, preferably from 0.5 to 5.0 dl/g in terms of intrinsic viscosity measured in a tetralin solution at 135°C and in a range of from 0.1 to 100 in terms of MFI (melt flow index: ASTM D-1238).

Examples of the isotactic polypropylene usable in the present invention include propylene homopolymer and copolymers of propylene with ethylene and/or an α-olefin. It is particularly preferred to employ known isotactic propylene homopolymer, isotactic propylene-ethylene random copolymers and the like, which are available on the market. When transparency is of primary importance, use of a crystalline propylene-ethylene random copolymer is recommended. When the formability is important, on the other hand, use of propylene homopolymer is recommended.

As crystalline propylene-ethylene random copolymers having an isotactic structure, those having an ethylene content of 1-5 wt.%, preferably 2-4 wt.% are preferred.

In addition, an isotactic polypropylene available from the use of a catalyst composed mainly of a so-called metallocene compound as described, for example, in Japanese Patent Laid-Open Nos. 130314/1986 and 12406/1991 can also be used.

The molecular weight of the isotactic polypropylene to be added may be in a range of from 0.1 to 10 dl/g, preferably from 0.5 to 5.0 dl/g in terms of intrinsic viscosity as measured in a tetralin solution at 135°C and in a range of from 0.1 to 100 in terms of MFI (melt flow index: ASTM D-1238). It is generally preferred to use an isotactic polypropylene whose MFI is close to that of the syndiotactic polypropylene to be employed in combination.

The melting temperature for the resin upon molding may be in a range of from 160°C to 260°C, so that a temperature which is adopted upon molding a usual isotactic polypropylene can be selected. Upon this selection, the melting temperature is set depending on the MFI of the main component.

To prevent the isotactic polypropylene or syndiotactic polypropylene, whichever added in a small amount, from becoming a cause for a granular structure or the like, it is desired to use as the isotactic polypropylene or syndiotactic polypropylene one having an MFI at least 0.5 times as high as, preferably equal to or higher than the MFI of the polypropylene as the main component.

In the tubular film extrusion method according to the present invention for polypropylene, a polypropylene resin composition comprising 5-95 parts by weight of a syndiotactic polypropylene having a syndiotactic pentad fraction of at least 0.5 and 95-5 parts by weight of an isotactic polypropylene can be used. To improve the formability of the syndiotactic polypropylene, a polypropylene resin composition composed of 95-50 parts by weight, preferably 85-60 parts by weight of a syndiotactic polypropylene and 5-50 parts by weight, preferably 15-40 parts by weight of an isotactic polypropylene can be used. To furnish an isotactic polypropylene with good formability upon air-cooled tubular film extrusion and/or to improve the flexibility, transparency, gloss and the like of the isotactic polypropylene, on the other hand, a composition composed of 5-50 parts by weight, preferably 15-40 parts by weight of a syndiotactic polypropylene and 95-50 parts by weight, preferably 85-60 parts by weight of the isotactic polypropylene can be used. Their mixing proportions can be selected suitably according to the application purpose.

In the tubular film extrusion method according to the present invention, it is also possible to improve physical properties such as impact resistance by adding a resin or an elastomer insofar as it does not impair properties of the resultant film such as the transparency and surface gloss. Examples of the resin and elastomer include ethylene-propylene copolymer rubbers, ethylene-propylene-non-conjugated diene copolymer rubbers, ethylene-butene rubbers, propylene-butene rubbers, hydrogenated styrene-butadiene diblock copolymers, hydrogenated styrene-butadiene random copolymers, hydrogenated styrene-butadiene-styrene triblock copolymers, hydrogenated styrene-isoprene diblock copolymers, hydrogenated styrene-isoprene-styrene triblock copolymers, low-density polyethylene, high-density polyethylene, linear low-density polyethylene, ultra-low density polyethylene, ethylene-ethyl acrylate copolymers, ethylene-vinyl acetate copolymers, and polybutenes. To the resin composition, it is also possible to add, as needed, various additives such as an antiblocking agent, a lubricant, a nucleating agent, an ultraviolet light absorber, a heat stabilizer, a weathering stabilizer, a radiation-resisting agent, a pigment and a dye.

The resin composition useful in the practice of the present invention can be prepared by mixing a syndiotactic polypropylene and an isotactic polypropylene and, optionally, a known stabilizer and/or known additives in a mixer such as Henschel mixer, melting and kneading the mixture in an extruder and then granulating the resulting melt. As an alternative, hot rolls, a Banbury mixer, a pressure kneader or a Brabender blender can be employed. It is also possible, as a further alternative, to separately granulate the syndiotactic polypropylene and the isotactic polypropylene into pellets through an extruder or the like and to blend them together upon formation of films.

In the air-cooled tubular film extrusion method to which the present invention is directed, the polypropylene resin composition useful in the practice of the present invention is molten and extruded in a tubular form by a ring-die-equipped extruder, cooled down by air-cooling rings, passed along a guide plate, folded by pinch rolls and then taken up by a haul-off unit. This extrusion method does not require any special equipment because it can be practiced using commercially-available equipments including an extruder, cooling rings and a haul-off unit. The air-cooled tubular film extrusion method according to this invention employs air-cooling rings which blow air, fed from a blower or the like, against a molten tube to cool and solidify the same.

According to the tubular film extrusion method of the present invention, the use of a resin composition composed of a syndiotactic polypropylene and an isotactic polypropylene has made it possible to more easily obtain a tubular film having good transparency and surface gloss than the use of a syndiotactic polypropylene alone. The film so obtained is less whitish opaque and has crystal transparency compared with films available from conventional isotactic polypropylene, so that it has extremely high commercial value, for example, as a packaging material.

The present invention will hereinafter be described in further detail by examples. It is however to be noted that the present invention is not limited to them. Incidentally, measurements in each example were conducted according to the following methods. Measured values of haze are shown in Table 1.
(1) Melt flow index: ASTM D-1238 was followed.
(2) Haze: ASTM-D-1003 was followed.
(3) Young's modulus: The Mitsui Toatsu Chemicals' method was followed. Namely, a 10 mm x 80 mm test piece of a film was drawn at a rate of 20 mm/min and the initial modulus of the test piece was measured as its Young's modulus).
(4) Impact strength: The Mitsui Toatsu Chemicals' method was followed. Using a film impact tester manufactured by Toyo Seiki Seisakusho, Ltd., a 80 mm x 90 mm test piece of a film was caused to rupture by a spherical rod with a 1/2'-diameter spherical tip. The energy required for the rupture was measured and then divided by the thickness of the test piece, whereby its impact strength was determined. The measurement was conducted at 5°C.

### Examples 1-3

A 16-ℓ dry stainless-steel autoclave was purged with nitrogen, in which 10 ℓ of liquefied propylene were then charged. Also charged were 30 mℓ of a solution of methylalminoxane in toluene (Al: 40 mmol, average polymerization degree of methylaluminoxane: 20), followed by stirring for 15 minutes. On the side and in parallel with the above procedures, 12.4 mg of diphenylmethylene-(9-fluorenyl)(cyclopentadienyl)-zirconium dichloride were dissolved in 15 mℓ of a solution of methylaluminoxane in toluene (Al: 20 mmol, average polymerization degree of methylalminoxane: 20). The latter solution was charged in the autoclave, followed by the addition of hydrogen. The autoclave was heated to 70°C, at which polymerization was conducted for one hour. The autoclave was then opened, whereby 2.3 kg of syndiotactic polypropylene were obtained. The intrinsic viscosity (which will hereinafter be abbreviated as "η") of the syndiotactic polypropylene so obtained as measured in a tetralin solution at 135°C was 1.39 dℓ/g, its melt flow index (which will hereinafter be abbreviated as "MFI") 3.2 g/10 min., its peak crystallization point as measured by a differential scanning calorimeter 74.6°C and its syndiotactic pentad fraction as measured by ¹³C-NMR 0.787. Propylene resin compositions were prepared by mixing the above-described syndiotactic polypropylene ("H-SPP") and a crystalline isotactic ethylene-propylene random copolymer ("EFL-100", trade name, product of Mitsui Toatsu Chemicals, Inc., MFI: 7 g/10 min, ethylene content: 4.9 wt.%) in proportions shown in Table 1. Each of the compositions so obtained was formed into a film by a 45 mm-diameter tubular film extruder equipped with a 120 mm-diameter circular die under the conditions of an extruder temperature of 200°C, a die temperature of 190°C, a winding rate of 8 m/min. and air cooling, whereby a film of 50 Ìm in thickness was successfully obtained with ease. The film so obtained had good transparency and moreover, permitted full opening.

According to the tubular film extrusion method of the present invention, the use of the propylene resin composition composed of the syndiotactic polypropylene and the isotactic polypropylene has achieved formability far improved over the single use of the syndiotactic polypropylene, thereby making it possible to provide a film having excellent transparency by the air-cooled method which has heretofore had difficulty in providing a highly transparent film from isotactic polypropylene.

### Example 4

In a similar manner to Example 1 except that as the polypropylene resin composition, that composed of 70 parts by weight of the syndiotactic homopolypropylene, "H-SPP", and 30 parts by weight of an isotactic propylene homopolymer ("JHH-G", trade name; product of Mitsui Toatsu Chemicals, Inc., MFI: 8 g/10 min) was used, a tubular film of 50 Ìm in thickness was successfully formed with ease. The film so obtained had good transparency and permitted full opening. In addition, it was flexible and had good impact resistance.

### Comparative Example 1

The crystalline isotactic ethylene-propylene random copolymer, "EFL-100", was formed into a film under similar conditions to Example 1, whereby a 50 µm-thick film was obtained by the tubular film extrusion method. The film so obtained had poor transparency.

### Comparative Example 2

The syndiotactic homopolypropylene, "H-SPP", was formed into a film under conditions to Example 1. The film so obtained by the tubular film extrusion method, however, was hardly opened, thereby failing to measure its precise thickness and haze.

### Comparative Example 3

The crystalline isotactic propylene homopolymer, "JHH-G", was formed into a film under similar conditions to Example 1, whereby a 50 µm-thick film was obtained by the tubular film extrusion method. The film so obtained had poor transparency.

**Table 1**

| Example or Comp. Ex. | H-SPP Parts by weight | FEL100 Parts by weight | JHH-G Parts by weight | Total haze % | Young's modulus kg/cm² | Impact strength kg·cm/mm |
|---|---|---|---|---|---|---|
| Ex. 1 | 30 | 70 | | 5.5 | 6150 | 12 |
| Ex. 2 | 50 | 50 | | 2.9 | 5070 | 15 |
| Ex. 3 | 70 | 30 | | 1.1 | 4150 | 18 |
| Ex. 4 | 70 | | 30 | 1.4 | 5230 | 13 |
| Comp. Ex. 1 | | 100 | | 22.3 | 8060 | 8 |
| Comp. Ex. 2 | 100 | | | | | |
| Comp. Ex. 3 | | | 100 | 83.4 | 12800 | 1 |
| The film obtained in Comparative Example 2 did not permit evaluation due to the inferior formability of the resin employed therein. | | | | | | |

## Claims

1. A film forming method for a polypropylene resin composition, which comprises subjecting a polypropylene resin composition composed of 5 to 95 parts by weight of a syndiotactic polypropylene and 95 to 5 parts by weight of an isotactic polypropylene to air-cooled tubular film extrusion.

2. A method according to claim 1, wherein the syndiotactic polypropylene has a syndiotactic pentad fraction of at least 0.5 as measured by ¹³C-NMR.

3. A method according to claim 2, wherein the syndiotactic polypropylene is a syndiotactic propylene homopolymer having a syndiotactic pentad fraction of at least 0.7 as measured by ¹³C-NMR.

4. A method according to claim 2, wherein the syndiotactic polypropylene is a syndiotactic propylene copolymer which contains propylene chains having a syndiotactic pentad fraction of at least 0.5 as measured by ¹³C-NMR.

5. A method according to claim 4, wherein the syndiotactic polypropylene copolymer is a copolymer of propylene and ethylene and/or an α-olefin.

6. A method according to claim 1, wherein the isotactic polypropylene is a propylene homopolymer or a copolymer of propylene with ethylene and/or an α-olefin.

7. A method according to claim 5, wherein the isotactic polypropylene is a copolymer of propylene with ethylene and/or an α-olefin.

8. A method according to claim 1, wherein the polypropylene resin composition is composed of 85 to 60 parts by weight of a syndiotactic polypropylene and 15 to 40 parts by weight of an isotactic polypropylene.

9. A method according to claim 1, wherein the polypropylene resin composition is composed of 15 to 40 parts by weight of a syndiotactic polypropylene and 85 to 60 parts by weight of an isotactic polypropylene.

## Patentansprüche

1. Verfahren zur Bildung von Folien aus einer Polypropylenharz-Zusammensetzung, die das Unterwerfen einer Polypropylenharz-Zusammensetzung, die aus 5 bis 95 Gewichtsteilen eines syndiotaktischen Polypropylens und 95 bis 5 Gewichtsteilen eines isotaktischen Polypropylens zusammengesetzt ist, unter eine luftgekühlte Schlauchfolien-Extrusion umfaßt.

2. Verfahren nach Anspruch 1, bei welchem das syndiotaktische Polypropylen eine mittels ¹³C-NMR gemessene syndiotaktische Pentad-Fraktion von zumindest 0.5 aufweist.

3. Verfahren nach Anspruch 2, bei welchem das syndiotaktische Polypropylen ein syndiotaktisches Polypropylen-Homopolymer ist, das eine mittels ¹³C-NMR gemessene Pentad-Fraktion von zumindest 0.7 aufweist.

4. Verfahren nach Anspruch 2, bei welchem das syndiotaktische Polypropylen ein syndiotaktisches Propylen-Copolymer ist, das Propylenketten mit einer mittels ¹³C-NMR gemessenen syndiotaktischen Pentad-Fraktion von zumindest 0.5 aufweist.

5. Verfahren nach Anspruch 4, bei welchem das syndiotaktische Polypropylen-Copolymer ein Copolymer von Propylen und Ethylen und/oder einem α-Olefin darstellt.

6. Verfahren nach Anspruch 1, bei welchem das isotaktische Polypropylen ein Propylen-Homopolymer oder ein Copolymer von Propylen mit Ethylen und/oder einem α-Olefin darstellt.

7. Verfahren nach Anspruch 5, bei welchem das isotaktische Polypropylen ein Copolymer von Propylen mit Ethylen und/oder einen α-Olefin darstellt.

8. Verfahren nach Anspruch 1, bei welchem die Polypropylenharz-Zusammensetzung zusammengesetzt ist aus 85 bis 60 Gewichtsteilen eines syndiotaktischen Polypropylens und 15 bis 40 Gewichtsteilen eines isotaktischen Polypropylens.

9. Verfahren nach Anspruch 1, bei welchem die Polypropylenharz-Zusammensetzung zusammengesetzt ist aus 15 bis 40 Gewichtsteilen eines syndiotaktischen Polypropylens und 85 bis 60 Gewichtsteilen eines isotaktischen Polypropylens.

## Revendications

1. Procédé de formage de film pour une composition de résine de polypropylène, qui consiste à soumettre une composition de résine de polypropylène constituée de 5 à 95 parties en poids d'un polypropylène syndiotactique et 95 à 5 parties en poids d'un polypropylène isotactique à une extrusion de film tubulaire refroidi par air.

2. Procédé selon la revendication 1, dans lequel le polypropylène syndiotactique a une fraction pentavalente syndiotactique d'au moins 0,5 mesurée par RMN-¹³C.

3. Procédé selon la revendication 2, dans lequel le polypropylène syndiotactique est un propylène homopolymère syndiotactique ayant une fraction pentavalente syndiotactique d'au moins 0,7 mesurée par RMN-¹³C.

4. Procédé selon la revendication 2, dans lequel le polypropylène syndiotactique est un propylène copolymère syndiotactique qui contient des chaînes propylène ayant une fraction pentavalente syndiotactique d'au moins 0,5 mesurée par RMN-¹³C.

5. Procédé selon la revendication 4, dans lequel le polypropylène copolymère syndiotactique est un copolymère de propylène et d'éthylène et/ou une α-oléfine.

6. Procédé selon la revendication 1, dans lequel le polypropylène isotactique est un propylène homopolymère ou un copolymère de propylène avec de l'éthylène et/ou une α-oléfine.

7. Procédé selon la revendication 5, dans lequel le polypropylène isotactique est un copolymère de propylène avec de l'éthylène et/ou une α-oléfine.

8. Procédé selon la revendication 1, dans lequel la composition de résine polypropylène est composée de 85 à 60 parties en poids d'un polypropylène syndiotactique et 15 à 40 parties en poids d'un polypropylène isotactique.

9. Procédé selon la revendication 1, dans lequel la composition de résine polypropylène est composée de 15 à 40 parties en poids d'un polypropylène syndiotactique et 85 à 60 parties en poids d'un polypropylène isotactique.
